# EUROPEAN PATENT SPECIFICATION

(11) **EP 0 323 481 B1**
(45) Date of publication and mention of the grant of the patent: **07.12.1994**
(21) Application number: 87906267.7
(22) Date of filing: 03.09.1987
(51) Int. Cl.: B32B 27/18, B32B 27/40

(54) **MICROPOROUS COATINGS**
MIKROSPORÖSE BESCHICHTUNGEN
REVETEMENTS MICROPOREUX

(30) Priority: 03.09.1986 US 903130; 09.09.1986 US 905135
(43) Date of publication of application: 12.07.1989
(73) Proprietor: Burlington Industries, Inc., Greensboro North Carolina 27420 (US)
(72) Inventor: TOWERY, Donald, R., Pleasant Garden, NC 27313 (US); HILL, Berlie, R., Cana, VA 24317 (US); WATSON, Thomas, F., Greensboro, NC 27406 (US); TRIPLETT, Benny, L., Pleasant Garden, NC 27313 (US)
(74) Representative: Kenyon, Sarah Elizabeth
(86) International application number: US8702278
(87) International publication number: WO8801570

(56) References cited:
- DE-A- 1 694 291
- US-A- 3 968 292
- US-A- 4 504 541
- US-A- 4 507 413
- US-A- 4 554 198
- Chemical Abstracts, vol. 107, no. 6, August 1987, p. 92, abstract 41631c, Columbus, Ohio, US; & JP-A-61 160 480

## Description

### TECHNICAL FIELD

This invention relates to an improved resin-containing coating solution which, when applied to a fabric substrate and processed to coagulate the resin, results in an improved, waterproof, microporous, moisture-vapor-permeable fabric. The invention also relates to protecting a moisture-permeable, waterproof, coated fabric from ultraviolet light deterioration as manifested by yellowing, loss or change of color, or loss of desirable mechanical properties. The coating solution may further include antimicrobial agents, ultraviolet light stabilisers and/or flame retardants which are also contained in and distributed throughout the cellular matrix of the finished microporous polymeric coating. The coated fabric retains good moisture permeability with durable waterproofness and other desirable properties (resistance to microbial attack and degradation caused by ultraviolet light and flame resistance, depending upon the components of the coating solution) that remain characteristic of the fabric even following multiple launderings. Procedures for making such fabrics are also described.

### BACKGROUND

Coated fabrics suitable for use as activewear, rainwear and tentage function by blocking the pores of a woven, knitted or non-woven with a cohesive polymer film which acts as a physical barrier against wind, water, and in the case of protective workwear, aggressive chemicals, oils, and greases. This barrier or coating distinguishes polymer coatings from chemical finishes which merely coat the individual fibers of a fabric without blocking the pores, and repel fluids by surface tension effects. Microporous coated fabrics repel water from the outside yet allow perspiration and moisture vapor to escape from the inside. Moisture is transmitted through a tortuous physical pathway produced in the cellular film or coating resulting from the art-recognized wet coagulation process, as described in more detail below. Polymeric coatings have initially been based upon rubber or synthetic or fluorocarbon rubbers, and more recently, polyurethanes, acrylics, silicone elastomers and polyvinylchlorides.

Fashion and leisurewear, particularly rainwear, require that the coated material be attractive with good drape and handle, that it be water repellent, although not necessarily for prolonged use in heavy rain, and that the fabric retain these properties after dry cleaning or laundering.

There are several fabrics available that satisfy the conflicting requirements of waterproofness and breathability. One example is Entrant, which is a woven nylon fabric coated with a microporous polyurethane film formed by the so-called wet coagulation technique as described in U.S. Patent 4,429,000 to Toray Industries, Inc. Other polyurethane coated fabrics are described in U.S. Patent 3,360,394 to Griffin. In the wet coagulation method, a thin, microporous polyurethane layer is formed on a base fabric by applying a coating solution of a polyurethane dissolved in a polar organic solvent that will solubilize the polyurethane yet is miscible with water. The polymer solution is applied to the fabric substrate by knife coating or the like, then immersed in a bath of water which selectively dissolves or mixes with the organic solvent, exchanges water for the polar solvent and causes the previously dissolved polyurethane to coagulate, leaving a thin, microporous coating having a cellular substrate on the fabric. Surface pores that result are generally one micrometer or less in diameter. Such pores are small enough to exclude water droplets and yet they provide a tortuous physical pathway from the base fabric to the coating surface, to allow water vapor to pass through the fabric. The coating is a thin polymeric (polyurethane) film.

Typical coating solutions contain a resin, visually a polyurethane elastomer, optionally a water repellent agent, a thickener, a surfactant, an ultraviolet light stabilizer and/or an antimicrobial and possibly other adjuvants, all dissolved in a water-miscible polar organic solvent such as dimethylformamide, N-methyl-2-pyrrolidone, dimethylacetamide or dimethylsulfoxide. The coagulating bath contains water with up to 20% by weight of the same or a compatible polar solvent. Coating viscosity must be carefully controlled to adjust penetration and interstitial strike-through, especially on loosely-woven and textured fabrics.

When coating textile fabric with a resinous material dissolved in a liquid medium, final distribution of the dried coating depends on several factors, including the coating method, fabric geometry, and coating viscosity. In many situations, coating viscosity is the variable most easily manipulated to control coating distribution. When dealing with true solution coatings, the solute molecular weight, solute concentration, and nature of the solvent have an influence on coating viscosity. However, optimum physical and handling properties of the coating are often obtained within specific ranges of molecular weight and polymer concentration. Application techniques can also severely limit solvent choices. With these practical operational constraints, a viscosity control additive is required. Traditional thickeners for such resin-containing solutions are natural and modified gums, solvent-interactive fillers, and high molecular weight synthetic polymers. The choice of thickening agent has traditionally been made on the basis of compatibility, coating performance requirements, and economics.

This invention provides a convenient, reliable thickener system exhibiting the required ease of processing without detracting from the desired physical properties of the finished product. Water-coagulable coatings for textiles must exhibit coagulation rates within relatively narrow limits to maintain reproducible fabric properties. Candidate thickeners must have little or no effect on coagulation rates. Disclosed is a thickener system that satisfies these various requirements.

Rain-soaked and badly soiled garments must be cleaned or at least dried before long term storage to prevent proliferation of airborne bacteria and fungal spores that find a warm, moist environment hospitable. Such organisms find the cellular structure of this type of fabric attractive and can attack certain synthetic polymers, causing degradation of the polymer, in some cases, or at least permanent discoloration. In susceptible polymer coatings, biodegradation may be initiated in microscopic cracks and can eventually lead to delamination of the coating from the fabric and consequent loss of waterproofness.

The cellular structure of this type of microporous coating is subject to contamination with body oils, particularly when used as an article of apparel, due to direct contact with the skin or indirect transmission through a lining fabric. Thus, the potential exists for the production of undesirable odors, mildew and even discoloration since all the ingredients needed are present, namely, moisture, heat, and a nutrient for bacteria. It is also known that organic polymers are subject to bacterial attack which can result in deterioration of the polymer. A real need exists for the prevention of these undesirable occurrences.

It is an object of this invention to impart to a microporous coated fabric the ability to prevent odor, discoloration, mildew, even discoloration due to bacterial growth. Furthermore, the coating retains its effectiveness even following repeated launderings.

Polymeric materials such as plastics, foams and fibers can be protected from deterioration caused by light by the use of either ultraviolet **absorbers** or ultraviolet light **stabilizers**. The deterioration is usually manifested by yellowing, loss or change of color, or loss of desirable mechanical properties. The commonly-used ultraviolet absorbers, or screening agents, are often benzophenone derivatives, such as 2-hydroxybenzophenone. These reagents absorb ultraviolet light and re-emit the energy at another less harmful wavelength, or as heat. They usually suffer some degradation in the process of saving the polymer from degradation.

Another object of this invention is to protect thin microporous polyurethane films from deterioration caused by ultraviolet light. Topical treatments are known to provide a modest degree of ultraviolet (UV) protection for coated fabrics. These treatments are water-based in nature, and must be applied as a final finish by a final pad, dry, cure procedure. With most coated fabrics, this approach works, but with a microporous coating having a cell structure of many voids or micropores generally one micrometer or smaller in diameter, the pores are small enough to exclude liquid water. The water-based UV-protective treatment therefore cannot penetrate the inner structure of the coating's matrix, leaving it unprotected, and it will yellow with aging or exposure to light.

Ultraviolet light stabilizers, of which hindered amine light stabilizers are a class, do not function by the typical mechanism of ultraviolet absorption, but rather interrupt the decomposition mechanism initiated by ultraviolet light. Tinuvin® 292 (registered trademark of Ciba-Geigy, Corp., Ardsley, New York), the stabilizer of choice in the present invention, is a hindered amine light stabilizer. Products provided with effective protection against ultraviolet light for 20 hours in AATCC Test Method 16A-1982 are produced by this invention.

In addition to apparel uses, microporous coated fabrics are used for tentage and tarpaulins. Both uses demand waterproofness as a primary requirement. For both, a high water vapor transmission rate is very desirable, in order to prevent the accumulation of condensed moisture on the inner surface of the structure. Flame resistance, particularly in tents for both military and civilian use, is extremely important for articles constructed of microporous coated fabrics. As with the other components mentioned above, the flame-resistant coating must be durable to cleaning, usually laundering in water. Flame-resistant microporous coated fabrics are included within this invention.

Microporous coatings, as described above and elsewhere, are made by dissolving a polymer in a water-miscible solvent, then mechanically applying this solvent solution as a coating to a fabric. The thus-coated fabric is then immersed in a non-solvent, such as water. The microporous structure of the coating is completed when all the solvent has been displaced with the non-solvent, leaving a microporous layer on the base fabric.

Experience has made it clear that unprotected microporous coatings using aromatic polyester-based urethanes dissolved in N,N-dimethylformamide (DMF) have a severe lightfastness problem, and will not meet the apparel industry standard of effective protection against ultraviolet light for 20 hours. Other highly desirable properties for particular applications and constructions, such as antimicrobial properties, and/or flame resistance may also be imparted to the microporous coatings by this invention.

### DISCLOSURE OF THE INVENTION

Disclosed is a process for preparing a waterproof, water-vapor-permeable coated fabric that also preferably has antimicrobial properties, exhibits enhanced flame resistance and/or is protected from ultraviolet light degradation, while at the same time exhibiting good hydrostatic pressure resistance, formed in a rapid and reproducible manner by coagulation from a solvent solution of a polyurethane elastomer optionally containing a silyl quaternary ammonium bioactive material, a hindered amine ultraviolet light stabilizer and/or a flame retardant. The fabric is coated using the wet coagulation method in which a polymeric elastomer or mixture of polymeric elastomers is dissolved in a water-miscible polar organic solvent. The polymer solution to which from 0.01 to 10% by weight of a silyl quaternary ammonium bioactive material, from 0.1 to 1% by weight of the hindered amine ultraviolet light stabilizer and/or a flame-retarding amount of an effective flame retardant is added, calculated on the weight of the coating mix (preferably, all three are included), is coated onto a base fabric and then immersed in a coagulation water bath. The water extracts the polar organic solvent, which is itself water-miscible, from the coating, leaving a porous, spongy polyurethane matrix having the specified porosity and other properties, as well as the ultraviolet stabiliser bioactive material and flame retardant, when used, on the base fabric. Washing to remove any unextracted polar organic solvent and drying follow. Optionally, a water repellent fluorocarbon finish, or a second ultraviolet light stabiliser is later applied.

A convenient thickener system based on acrylic acid polymers that are compatible with the solvent/polyurethane system and soluble in the solvent is used to control and adjust coating solution viscosity which, in turn, leads to thin, flexible polyurethane elastomer coatings having the optimum performance and customer acceptance properties. Most desirable coatings, when applied, are adjusted with the disclosed acrylic acid thickener system to have a viscosity in the range of at least 6 Pa·s, the required viscosity being higher, the more open the fabric structure. The acrylic acid polymer thickener system has a molecular weight in the range of about 450,000 to about 4,000,000 and is preferably based upon a combination of two different acrylic acid polymers having different molecular weights from within the designated range.

The invention provides a process for maring a waterproof, water-vapour-permeable coated fabric having a microporous polyurethane layer thereon formed by the wet coagulation method, said process comprising applying a water-miscible, organic polar solvent solution of a polyurethane elastomer to a base fabric, immersing the thus-coated base fabric into an aqueous coagulation bath to extract the solvent from the polymer solution leaving a porous polyurethane matrix adhered to the base fabric, then washing and drying the coated fabric to produce a microporous, water-vapour-permeable polyurethane layer thereon, characterised in that the polar organic solvent solution of polyurethane elastomer contains an acrylic acid thickener having a molecular weight in the range of from about 450,000 to about 4,000,000, the polyurethane elastomer coating, when applied to the base fabric, has a viscosity of at least 0.5 Pa·s, and the resulting microporous polyurethane layer has a moisture-vapour transmission rate of at least 800 grams/square meter/24 hours and a hydrostatic pressure resistance of at least 69 kPa.

Preferred thickeners are the Carbopol resins, which are soluble in both water and in a water-miscible polar organic solvent such as dimethylformamide (DMF), and readily thicken upon addition of a base. Carbopol resins are manufactured by B.F. Goodrich, and are currently offered in six variations. These resins are acrylic acid polymers crosslinked with a polyalkenyl polyether and have an equivalent weight of 76. The resins most suited for thickening water-coagulable solvent coatings are: Carbopols 934, 940 and 941, with molecular weights of 3,000,000; 4,000,000; and 1,250,000, respectively. These resins dissolve in DMF to yield viscous, turbid solutions; apparently enough dimethylamine is present in DMF to partially neutralize the Carbopol resins. Carbopol 934 and 940 apparently are similar in structure, but the higher molecular weight of Carbopol 940 results in a higher viscosity. Carbopol 941 is different from the other two in that despite its lower molecular weight, it is an extremely efficient thickener at low concentrations and has a somewhat stringy rheology.

The supplier, B.F. Goodrich, recommends several secondary and tertiary amines for neutralization to obtain optimum performance with DMF. Of these, di-(2-ethylhexyl)amine was used at a much lower amount than that recommended by the manufacturer. B.F. Goodrich recommends 2.5 parts of di-(2-ethylhexyl)amine per part of Carbopol for neutralization; it was found that in DMF, only 0.5-.75 parts were necessary for maximum viscosity development.

In order to obtain the best balance of properties required, a 50/50 blend of Carbopol 941 (the more viscous but stringy polymer) and Carbopol 934 may be used; higher viscosity yields are obtained with blends of Carbopol 941 and 940.

The coating solutions of the present invention are based upon urethane resins dissolved in a water-miscible, polar organic solvent. The type of urethane resin systems and components contained in the coating prior to or after coagulation may vary widely. Several such systems are disclosed in the art, for instance in U.S. 4,429,000 and elsewhere. The following is a preferred system. A preferred series of polyurethane resins are Texthane 620C and 420C available from Polymer Industries, a subsidiary of Morton Thiokol. They are aromatic polyester urethane resins, 620C characterized as a soft resin, and 420C as a firm resin; both resins are sold as dimethylformamide solutions.

The coating composition preferably also includes at least one surfactant to control the rate at which water exchanges with dimethylformamide in the wet coagulation process, which, in turn, affects the pore size of the urethane foam. Nonionic surfactants such as the Pluronic polyols, which are block copolymers of polyoxypropylene and polyoxymethylene, are suitable materials. The polyoxypropylene serves as hydrophobe and the polyoxyethylene as lipophobe. As with the acrylic acid thickener, a mixture of two of these nonionic surfactants gives the best results. Average molecular weight for the Pluronic L-35 is 1900, with polyoxypropylene equal to 50 weight percent. Pluronic F-68 has an average molecular weight of 8350 with the polyoxypropylene equal to 20 weight percent.

An amine is preferably added to neutralize the polyacrylic acid resin and several amines may be useful; however, best results were obtained with di(2-ethylhexyl)amine or with polyoxyethylene(15)octadecylamine (available as Ethomeen C/25 from Armak Chemicals Division of Akzo Chemie America). The water-miscible polar Organic solvent of choice is N,N-dimethylformamide, commonly referred to as DMF (CAS registry number 68-12-2), although other compatible solvents such as dimethylacetamide or dimethylsulfoxide may be considered.

The base fabric may be woven, knit or nonwoven. Filament polyester was used in the examples that follow; however, nylon and polyester/cotton or nylon/cotton blends of various constructions may be used.

Typical urethane-based, water-coagulable coating compositions are as follows:

| | |
|---|---|
| Urethane resin(s) | Up to 48% |
| Nonionic surfactant(S) | Up to 8% |
| Water | Up to 6% |
| Acrylic acid thickener | Up to 1% |
| Amine | Up to 0.15% |
| Antimicrobial* | 0.01 to 10% |
| Ultraviolet light stabilizer* | 0.1 to 1% |
| Flame retardant* | Up to 15% |
| Water-miscible polar solvent | Balance |

| | |
|---|---|
| * When present | |

It will be understood that the coating composition may contain coating additives and adjuvants, such as a pigment or colorant, water repellent, antistat, etc. Alternatively, any or all of these and/or flame retardants, ultraviolet light protectants and antimicrobials may be applied to the fabric as an aftertreatment following formation of the microporous layer.

The quantities of each of these ingredients may be varied depending upon the result desired, for instance depending on the coating viscosity and total solids requirements. Each of the above-listed ingredients must be present in the amount indicated or, if an optional ingredient, must be present in an amount of at least 0.01%. All parts and percentages herein are expressed by weight unless otherwise indicated. The minimum viscosity of the coating material, when applied to the base fabric is 0.5 Pa·s.

Performance requirements for urethane-coated fabrics will vary depending upon the application or end use to which the fabric is exposed.

The process of the invention results in a microporous polyurethane layer having a moisture vapour transmission rate of at least 800 g/m²/24 hours, and a hydrostatic pressure resistance of at least 69 kPa.

The coating solutions are prepared and then applied to the fabric substrate according to the following procedure:
**Preparing the Thickener in Liquid Form.** The Carbopol acrylic acid-type resins are supplied as dry powders of a very low apparent density and are prone to dust and float around the working area. To minimize this inconvenience, it has been found convenient to prepare a stock solution in DMF. The Carbopol resin and DMF are pre-weighed separately and the Carbopol is slowly sifted into rapidly agitated DMF, with stirring continued until no gel structure is evident. At this point, the Carbopol resin is neutralized to achieve maximum viscosity. A stock solution so prepared appears to have extended shelf life.

In addition to the thickeners, surfactants and other ingredients required to produce the microporous coating characterizing this invention, other components, active in their own right and capable of imparting desirable, often essential, properties to specific applications and constructions, may be included in the coating composition. These additional functional components, upon coagulation, become entrapped in the cellular matrix of the microporous coating, are resistant to removal or solubilization by water and remain in the coating in quantities effective for the intended purpose even following multiple launderings. These functional components, described in detail below, may be selected for inclusion in the coating composition, depending upon the intended use of the resulting product.

Certain antimicrobial agents have the ability to chemically bond to fibers and retain their effectiveness over a long period of use. One of these antimicrobial agents is 3-(trimethoxysilyl)-propyloctadecyldimethylammonium chloride, produced by Dow Corning Corporation and marketed under the name of DC-5700. Initially, a topical application of this material to a microporous coated fabric provided a durable, bacteriostatic product. This approach was tried with good results. However, since various types of fabrics that are coated require different amounts of coating to achieve desired properties, and in some cases this coating can be relatively thick, it was not known whether the topical treatment effectively permeated the entire coating. For these reasons it appeared that the most effective way to insure completeness of treatment with the antimicrobial agent would be to include it in the coating itself. Unfortunately, the improved bioactive compound is furnished by the supplier as a solution in methanol, which is not a solvent for polyurethane, the polymer used in many microporous coatings. Being a non-solvent, the methanol coagulated the polymer when the bioactive compound, with its methanol solvent, was added to the coating solution. However, it was found using the proper technique that the bioactive compound could be first dissolved in N,N-dimethylformamide (DMF), a solvent for polyurethanes, and then incorporated into the coating solution. By first solving this coagulation/addition problem, it was then possible to produce a coagulated, microporous coating having an antimicrobial agent throughout the entire cellular matrix which would give maximum protection against bacterial growth, coupled with maximum durability. The result is that not only is the coating protected from undesirable bacterial growth but the fabric, being in such close proximity to the now bacteriostatic coating, is also rendered bacteriostatic. This finding does not preclude the possibilities in some cases of an additional treatment of the fabric itself either as a post-treatment finish or a pretreatment prior to coagulation, or treatment of the combined fabric and coating with the bioactive compound if a need arises. In fact, a treatment of coated fabric with the bioactive compound is effective; however, with the discovery of the ability to include the bioactive compound not merely on but in the coating a more complete and effective protection is provided.

An additional and unexpected benefit of the addition of the bioactive compound to the coating was that a softer product with better drape and hand was obtained as compared to the same coating applied to a fabric without the addition of the bioactive compound.

The coagulation process requires the water in the coagulation bath to exchange with the solvent in the coating solution, as explained above. Because methanol, as in the commercially available DC-5700, is completely water soluble, it was expected that this would influence the substantivity of the bioactive compound, i.e., that the bioactive compound would also be exchanged and removed with the coating solvent. Surprisingly, it has been discovered that the bioactive compound is actively bound to the coagulated microporous coating since the water coagulation bath following coating and coagulation, on analysis, did not reveal the presence of any bioactive compounds. This is substantiated by the results of multiple home launderings; while some loss of the bioactive compound occurs, the coated fabric remains bioactive. Even after 10 machine washings, bacterial growth is prevented, as explained in more detail in the evidence below.

The preferred bioactive, antimicrobial component of the coating composition is a member of the class of silyl quaternary ammonium compounds. The preferred bioactive material is 3-(trimethoxysilyl)- propyloctadecyldimethylammonium chloride which is described in U.S. Patent No. 3,730,701. This class of suitable bioactive silyl quaternary ammonium compounds has the formula: 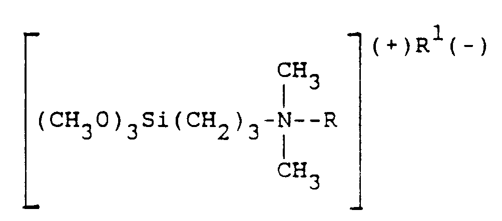
in which R is a C₁₁₋₂₂ alkyl group and R¹ is chlorine or bromine. The preferred silyl quaternary ammonium salt is 3-(trimethoxysilyl)-propyloctadecyldimethylammonium chloride and is available as a 42% active solids solution in methanol from Dow Corning Corporation of Midland, Michigan, U.S.A., under the designation DC-5700. This material is well accepted in commerce and has the necessary U.S. regulatory approvals, not only as a bacteriostatic textile treatment, but also as a bactericidal component for medical device/non-drug application.

When used, the amount of the silyl quaternary ammonium bioactive material will be within the following limits: the minimum amount is the quantity needed to achieve a specific minimum level of bioactivity, or to allow for process variations, if any, to maintain a specific predetermined level. The maximum amount will be limited by loss of substantivity on or in the coating as evidenced by excessive wash- or leach-out during laundering or in use, or otherwise, and is balanced by the cost of this relatively expensive component. Best results are obtained when the silicone quaternary ammonium salt is present in an amount of from 0.01 to 10% by weight, calculated on the weight in the coating mix, and preferably in the range of 0.08% and 4% by weight similarly calculated.

The mechanism of bacterial reduction is by activity of the antimicrobial in solution, and this means that the antimicrobial must leach out from the treated fabric to be effective. To be effective, leaching is required, and when leaching occurs, the durability of the treatment must be finite since, eventually, it will become depleted.

The ultraviolet screening agent used in the present invention is a hindered amine ultraviolet light stabilizer, preferably a bis(polyalkyl-4-piperidinyl) sebacate, and most preferably bis(1,2,2,6,6-pentamethyl-4-piperidinyl) sebacate. The amount of ultraviolet light stabilizer included in the aromatic urethane coating composition is at least sufficient to provide the degree of light protection required for the specific end use of the coated fabric although excessive quantities will be avoided for economic reasons. An amount of active material in the coating mixture ranging from 0.1% to about 1%, preferably 0.1% to 0.5%, will provide a degree of protection sufficient to satisfy AATCC standard 16A-1982.

Following formation of the ultraviolet screening agent-containing microporous film, the fabric may be finished with a top coat of an additional quantity of the same or a compatible ultraviolet screening agent or with a pigment such as titanium dioxide to further enhance protection to degradation caused by ultraviolet light.

Flame retardants may be included in the coating composition when flame resistance is desired for the finished product. Suitable flame retardants, as exemplified below, are incorporated into the organic solvent-based coating composition and result in a uniform, tightly-bound flame retardant distributed throughout the urethane matrix. To be durable to cleaning, the flame retardant must be securely bound to the coating and, preferably, insoluble in the cleaning media yet soluble in the organic solvent of the coating composition. The amount of flame retardant included is at least sufficient to impart to the coated fabric a minimum resistance to flame (according to the relevant criteria) up to a limiting amount that causes the fabric to become stiff and brittle. Expense may also be a limiting factor and the solubility of the particular flame retardant or mixture of retardants in the organic solvent must also be considered. Illustrative flame retardants include hexabromocyclododecane, pentabromodiphenyl oxide, bis(tribromophenoxy) ethane; however, successful results will be obtained with other available materials.

The coating formulation is prepared as follows: the urethane resin or mixture of resins is preweighed into a container. Water, the acrylic acid thickener, the polar organic solvent, usually DMF, the surfactant, and, optionally, the silyl quaternary ammonium salt bioactive material and/or the hindered amine-type ultraviolet light stabilizer and/or the flame retardant are preweighed into a separate container and mixed thoroughly. Other components of the type described above may be included. The water/solvent mixture is then added to the urethane under agitation. The optimum procedure for mixing of ingredients and order of mixing will be determined through a brief series of small-scale experiments, care being taken to avoid premature coagulation of the coating solution.

Once the coating solution is prepared, the urethane coating is applied to any textile substrate capable of supporting the liquid film by any conventional coating method appropriate for use in the wet coagulation method. The coated fabric is then dipped in a coagulation bath consisting of water, or water and an additive to alter or adjust coagulation, e.g., DMF, a surfactant, etc. During the coagulation step, the majority of DMF in the DMF/urethane film migrates into the coagulation bath and is replaced by water, generating a coherent, tenacious, microporous, spongy film on the fabric surface. After additional washing to remove any remaining DMF, the fabric is dried and optionally given a water repellant finish.

**Performance Characteristics and Evaluations**. The following examples evaluate various coated fabrics as to moisture vapor transmission rate (MVTR) measured according to ASTM E96-80, Procedure A; Mullen Hydrostatic Resistance (MH) measured according to ASTM D751-79; flame resistance measured by (U.S.) Federal Test Method Standard No. 191, Method 5903; and coating weight (CW) measured as grams of coating applied per square meter.

The invention will be further explained with reference to the following examples in which all parts and percentages are by weight unless otherwise indicated.

### Example 1 and Comparative Example B

Coating mixture (A) was prepared by mixing a previously prepared (as described above) acrylic acid thickener solution in DMF with a mixture of urethane resins, nonionic surfactant and diluents; a similar formulation (B) was prepared but without the acrylic acid thickener and thus not according to the present invention. The formulations, expressed in percent by weight, were:

| | A | B |
|---|---|---|
| Urethane resin (Texthane 620-C) | 29.7 | 29.7 |
| Urethane resin (Texthane 420-C) | 25.4 | 25.4 |
| Nonionic surfactant (Pluronic L-35) | 2.0 | 2.0 |
| Acrylic acid thickener (Carbopol 941 2% in DMF) | 6.0 | - |
| DMF | 36.9 | 42.9 |

Total solids of coating solution A was 17.9%. Coating solutions A and B were applied to a textured polyester taffeta by knife over roll coating, washed, dried and treated with a fluorocarbon/silicone water repellent. The following results were obtained:

| | A | B |
|---|---|---|
| Viscosity (Pa^{·}s) | 27 | 2.75 |
| Moisture vapor transmission rate (g/m²/24 hours) | 1,434 | 1,281 |
| Hydrostatic resistance (kPa) | 166 | 207 |
| Coating weight (g/m²) | 19.0 | 19.7 |

### Example 2

The following coating composition, expressed in percent by weight, was prepared:

| | |
|---|---|
| Urethane resin (Texthane 620-C) | 47.8 |
| Nonionic surfactant (Pluronic F-68) | 3.8 |
| DMF | 43.6 |
| Acrylic acid thickener (Carbopol 934 2% in DMF) | 4.8 |
| Total Solids | 18.2% |

This formulation was applied to a textured polyester taffeta fabric in the manner of Example 1 and evaluated with the following result:

| | |
|---|---|
| Viscosity (Pa·s) | 4.35 |
| Moisture vapour transmission rate (g/m²/24 hours) | 1,533 |
| Hydrostatic resistance (kPa) | 138 |
| Coating weight (g/m²) | 13.9 |

As a class, the acrylic acid resins provide reliable, easy-to-process, thickened DMF/urethane coating compositions, with the requisite coating and penetration properties, and the ability to coagulate with the urethane resin or resin system when introduced into the water coagulation bath while maintaining the desired microporous structure. The resulting coating is not water sensitive in that it withstands multiple machine launderings.

ENTRANT, CARBOPOL, TEXTHANE, PLURONIC, ETHOMEEN and GORETEX, used in the description are registered Trade Marks.

## Claims

1. A process for making a waterproof, water-vapour-permeable coated fabric having a microporous polyurethane layer thereon formed by the wet coagulation method, said process comprising applying a water-miscible, organic polar solvent solution of a polyurethane elastomer to a base fabric, immersing the thus-coated base fabric into an aqueous coagulation bath to extract the solvent from the polymer solution leaving a porous polyurethane matrix adhered to the base fabric, then washing and drying the coated fabric to produce a microporous, water-vapour-permeable polyurethane layer thereon, characterised in that the polar organic solvent solution of polyurethane elastomer contains an acrylic acid thickener having a molecular weight in the range of from about 450,000 to about 4,000,000, the polyurethane elastomer coating, when applied to the base fabric, has a viscosity of at least 0.5 Pa·s, and the resulting microporous polyurethane layer has a moisture-vapour transmission rate of at least 800 grams/square meter/24 hours and a hydrostatic pressure resistance of at least 69 kPa.

2. A process according to claim 1 in which the polar organic solvent is dimethylformamide and the acrylic acid polymer thickener is soluble in dimethylformamide.

3. A process according to claim 2 in which a mixture of two acrylic acid polymers each having different molecular weights and both soluble in dimethylformamide are used as the thickening agent.

4. A waterproof, water vapour-permeable coated fabric having a urethane coating with a moisture vapour transmission rate of at least 800 g/m²/24 hrs, and a hydrostatic pressure resistance of at least 69 kPa.

5. A process according to claims 1 to 3 for making a waterproof, water-vapour-permeable, antimicrobial coated fabric, wherein the polyurethane elastomer solution contains from about 0.01 to about 10 weight percent of a bioactive silyl quaternary ammonium compound of the formula: 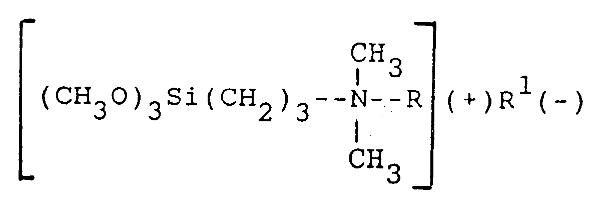 wherein R is an alkyl of 11 to 22 carbon atoms and R¹ is a bromine or chlorine.

6. A process according to claim 5 in which from about 0.08 to about 4.0 weight percent of the bioactive compound is present in the solution.

7. A waterproof, water-vapour-permeable antimicrobial coated fabric having a urethane coating with a moisture vapour transmission rate of at least 800g/m²/24 hours, and a hydrostatic pressure resistance of at least 69 kPa, which antimicrobial coating comprises a bioactive silyl quaternary ammonium compound of the formula: 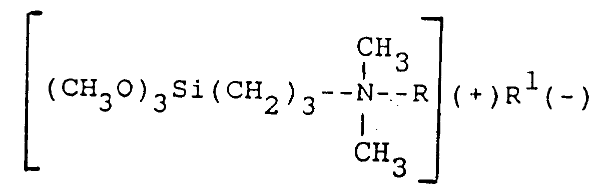 wherein R is an alkyl of 11 to 22 carbon atoms and R¹ is a bromine or chlorine.

8. A urethane-coated fabric with antimicrobial properties durable to ten home launderings, a moisture-vapour transmission of at least 800 g/m²/24 hrs, and a hydrostatic pressure resistance of at least 69 kPa.

9. A process according to claims 1 to 3 for making waterproof, water-vapour-permeable, coated fabric which is protected from ultraviolet light degradation, wherein the polyurethane elastomer solution contains from about 0.1 to about 1.0 weight percent of hindered amine ultraviolet light stabiliser sufficient to provide effective protection against ultraviolet light for 20 hours in AATCC Test Method 16A-1982.

10. A process according to claim 9 in which the amount of ultraviolet light stabiliser is in the range of from 0.1% to about 0.5%.

11. A process according to claim 9 in which the ultraviolet light stabiliser is bis (1,2,2,6,6-pentamethyl-4-piperidinyl)sebacate.

12. A waterproof, water-vapour permeable coated fabric with a thin, microporous aromatic urethane coating thereon having a moisture-vapour transmission of at least 800g/m²/24 hrs, a hydrostatic pressure resistance of at least 69 kPa and resistance to ultraviolet light for at least 20 hours according to AATCC Test Method 16A-1982.

13. A process according to claims 1 to 3 for making a water-proof, water-vapour permeable, coated fabric which is flame retardant treated, having a microporous polyurethane layer thereon wherein the polyurethane elastomer solution contains a flame-retarding amount of a flame retardant.

14. A waterproof, water-vapour permeable flame retardant treated coated fabric having a urethane coating with a moisture vapour transmission rate of at least 800g/m²/24 hours, and a hydrostatic pressure resistance of at least 69 kPa, which coating comprises a flame retardant.

## Patentansprüche

1. Verfahren zum Herstellen eines wasserdichten, Wasserdampfdurchlässigen beschichteten Textilerzeugnisses mit einer durch das Naßkoagulierungsverfahren darauf ausgebildeten mikroporösen Polyurethanschicht, wobei das Verfahren umfaßt Aufbringen einer in Wasser mischbaren Lösung eines Polyurethanelastomers in einem organischen polaren Lösungsmittel auf ein Basistextilerzeugnis, Untertauchen des so beschichteten Basistextilerzeugnisses in ein wässriges Koagulierungsbad um das Lösungsmittel aus der Polymerlösung zu extrahieren, wobei eine auf dem Basistextilerzeugnis haftende poröse Polyurethanmatrix Übrigbleibt, dann Waschen und Trocknen des beschichteten Textilerzeugnisses, wobei eine mikroporöse wasserdampfdurchlässige Polyurethanschicht darauf hergestellt wird, dadurch gekennzeichnet, daß die Lösung eines Polyurethanelastomers in dem organischen polaren Lösungsmittel ein Acrylsäureverdickungsmittel mit einem Molekulargewicht im Bereich von ungefähr 450,000 bis 4,000,000 enthält, daß die Polyurethanelastomerbeschichtung eine Viskosität von mindestens 0.5 Pa·s hat, wenn sie auf das Basistextilerzeugnis aufgebracht wird, und daß die entstandene mikroporöse Polyurethanbeschichtung eine Feuchtigkeits-Dampf-Durchlässigkeitsrate von mindestens 800 Gramm/Quadratmeter/24 Stunden und eine hydrostatische Druckbeständigkeit von mindestens 69 kPa hat.

2. Verfahren nach Anspruch 1, wobei das organische polare Lösungsmittel Dimethylformamid ist und das Acrylsäurepolymerverdickungsmittel in Dimethylformamid löslich ist.

3. Verfahren nach Anspruch 2, wobei ein Gemisch von zwei Acrylsäurepolymeren, die jeweils Verschiedene Molekulargewichte haben und beide in Dimethylformamid löslich sind, als das Verdickungsmittel verwendet werden.

4. Wasserdichtes, wasserdampfdurchlässiges beschichtetes Textilerzeugnis mit einer Urethanbeschichtung mit einer Feuchtigkeits-Dampf-Durchlässigkeitsrate von mindestens 800 g/m²/24 h und einer hydrostatischen Druckbeständigkeit von mindestens 69 kPa.

5. Verfahren nach einem der Ansprüche 1 bis 3 zum Herstellen eines wasserdichten, wasserdampfdurchlässigen, antimikrobiell beschichteten Textilerzeugnisses, wobei die Polyurethanelastomerlösung von ungefähr 0.01 bis ungefähr 10 Gewichtsprozent einer bioaktiven quaternären Ammonium-Silylverbindung der Formel: 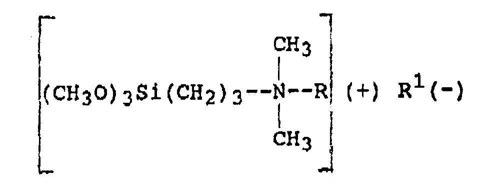 enthält, wobei R ein Alkyl von 11 bis 22 Kohlenstoffatomen und R¹ Brom oder Chlor ist.

6. Verfahren nach Anspruch 5, wobei von ungefähr 0.08 bis ungefähr 4.0 Gewichtsprozent der bioaktiven Verbindung in der Lösung vorhanden sind.

7. Wasserdichtes, wasserdampfdurchlässiges, antimikrobiell beschichtetes Textilerzeugnis mit einer Urethanschicht mit einer Feuchtigkeits-Dampf-Durchlässigkeitsrate von mindestens 800 g/m²/24 h und einer hydrostatischen Druckbeständigkeit von mindestens 69 kPa, wobei die antimikrobielle Beschichtung eine bioaktive quaternäre Ammonium-Silylverbindung der Formel: 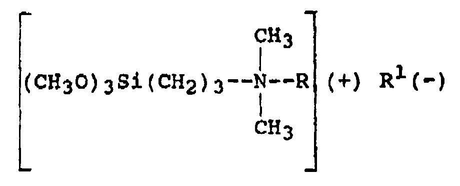 umfaßt, wobei R ein Alkyl von 11 bis 22 Kohlenstoffatomen und R¹ Brom oder Chlor ist.

8. Urethanbeschichtetes Textilerzeugnis mit antimikrobiellen Eigenschaften, die zehn Haushaltswaschvorgänge anhalten, mit einer Feuchtigkeits-Dampf-Durchlhässigkeit von mindestens 800 g/m²/24 h und einer hydrostatischen Druckbeständigkeit von mindestens 69 kPa.

9. Verfahren nach einem der Ansprüche 1 bis 3 zum Herstellen eines wasserdichten, wasserdampfdurchlässigen, beschichteten Textilerzeugnisses, das gegen Qualitätsverlust durch ultraviolette Strahlung geschützt ist, wobei die Polyurethanelastomerlösung von ungefähr 0.01 bis ungefähr 1.0 Gewichtsprozent eines Stabilisators gegen ultraviolette Strahlung eines behinderten Amins enthält, der ausreicht, um im AATCC Prüfverfahren 16A-1982 für 20 Stunden wirksamen Schutz gegen ultraviolette Strahlung bereitzustellen.

10. Verfahren nach Anspruch 9, wobei die Menge des Stabilisators gegen ultraviolette Strahlung im Bereich von 0.1% bis ungefähr 0.5% liegt.

11. Verfahren nach Anspruch 9, wobei der Stabilisator gegen ultraviolette Strahlung Bis(1,2,2,6,6-pentamethyl-4-piperidinyl)sebacat ist.

12. Wasserdichtes, wasserdampfdurchlässiges, beschichtetes Textilerzeugnis mit einer dünnen, mikroporösen, aromatischen Urethanschicht darauf mit einer Feuchtigxeits-Dampf-Durchlässigkeit von mindestens 800 g/m²/24 h und einer hydrostatischen Druckbeständigkeit von mindestens 69 kPa und einer Widerstandsfähigkeit gegen ultraviolette Strahlung von mindestens 20 Stunden nach dem AATCC Prüfverfahren 16A-1982.

13. Verfahren nach einem der Ansprüche 1 bis 3 zum Herstellen eines wasserdichten, wasserdampfdurchlässigen, beschichteten Textilerzeugnisses, das flammhemmend behandelt wird, mit einer mikroporösen Polyurethanschicht darauf, wobei die Polyurethanelastomerlösung eine flammhemmende Menge eines Flammenhemmstoffs enthält.

14. Wasserdichtes, wasserdampfdurchlässiges, flammhemmend behandeltes, beschichtetes Textilerzeugnis mit einer Polyurethanbeschichtung mit einer Feuchtigkeits-Dampf-Durchlässigkeitsrate von mindestens 800 g/m²/24 h und einer hydrostatischen Druckbeständigkeit von mindestens 69 kPa, wobei die Beschichtung einen Flammenhemmstoff umfaßt.

## Revendications

1. Procédé pour fabriquer un tissu enduit, imperméable à l'eau et perméable à la vapeur d'eau, sur lequel on a formé, par un procédé de coagulation par voie humide, une couche de polyuréthane microporeuse, ce procédé consistant à appliquer sur un tissu de base une solution dans un solvant polaire organique et miscible à l'eau d'un élastomère de polyuréthane, à immerger le tissu de base ainsi enduit dans un bain de coagulation aqueux pour extraire le solvant de la solution de polymère, en laissant une matrice poreuse de polyuréthane adhérente au tissu de base, puis à laver et sécher le tissu enduit pour obtenir sur ce dernier une couche de polyuréthane, microporeuse et perméable à la vapeur d'eau, caractérisé en ce que la solution dans un solvant organique polaire de l'élastomère de polyuréthane contient un épaississant à base d'un acide acrylique ayant une masse moléculaire comprise entre environ 450.000 et environ 4.000.000, l'enduction de l'élastomère de polyuréthane, quand elle est appliquée sur le tissu de base, a une viscosité d'au moins 0,5 Pa.s, la couche de polyuréthane microporeuse obtenue ayant une vitesse de transmission de la vapeur d'eau d'au moins 800 g/m².24 h et une résistance à la pression hydrostatique d'au moins 69 kPa.

2. Procédé selon la revendication 1, dans lequel le solvant organique polaire est le diméthylformamide, et l'épaississant à base d'un polymère de l'acide acrylique est soluble dans le diméthylformamide.

3. Procédé selon la revendication 2, dans lequel on utilise comme agent épaississant un mélange de deux polymères de l'acide acrylique, ayant des masses moléculaires différentes, les deux étant solubles dans le diméthylformamide.

4. Tissu enduit, imperméable à l'eau et perméable à la vapeur d'eau, sur lequel est appliqué un revêtement d'uréthane, ayant une vitesse de transmission de la vapeur d'eau d'au moins 800 g/m².24 h et une résistance à la pression hydrostatique d'au moins 69 kPa.

5. Procédé selon les revendications 1 à 3, pour fabriquer un tissu enduit antimicrobien, imperméable à l'eau et perméable à la vapeur d'eau, dans lequel la solution de l'élastomère de polyuréthane contient d'environ 0,01 à environ 10 % en poids d'un composé bioactif silyl-ammonium quaternaire ayant la formule suivante : 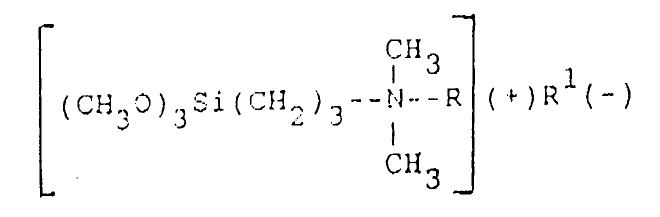 dans laquelle R est un radical alkyle ayant de 11 à 22 atomes de carbone, et R¹ est le brome ou le chlore.

6. Procédé selon la revendication 5, dans lequel on a dans la solution environ 0,08 à environ 4,0 % en poids du composé bio-actif.

7. Tissu enduit antimicrobien, imperméable à l'eau et perméable à la vapeur d'eau, possédant une enduction d'uréthane présentant une vitesse de transmission de la vapeur d'eau d'au moins 800 g/m².24 h et une résistance à la pression hydrostatique d'au moins 69 kPa, cette enduction antimicrobienne comprenant un composé bio-actif silyl-ammonium quaternaire ayant la formule suivante : 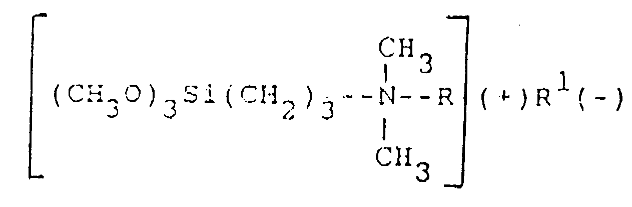 dans laquelle R est un radical alkyle ayant de 11 à 22 atomes de carbone, et R¹ est le brome ou le chlore.

8. Tissu enduit d'uréthane présentant des propriétés antimicrobiennes se maintenant jusqu'à dix lavages domestiques, une vitesse de transmission de la vapeur d'eau d'au moins 800 g/m².24 h et une résistance à la pression hydrostatique d'au moins 69 kPa.

9. Procédé selon les revendications 1 à 3, pour fabriquer un tissu enduit, imperméable à l'eau et perméable à la vapeur d'eau, lequel tissu est protégé d'une dégradation par la lumière ultraviolette, procédé dans lequel la solution d'élastomère de polyuréthane contient d'environ 0,1 à environ 1,0 % en poids d'un stabilisant UV à base d'une amine à empêchement stérique, suffisant pour assurer une protection efficace contre une lumière ultraviolette pendant 20 heures dans la méthode d'essai AATCC 16A-1982.

10. Procédé selon' la revendication 9, dans lequel la quantité de stabilisant UV est comprise entre 0,1 et environ 0,5 %.

11. Procédé selon la revendication 9, dans lequel le stabilisant UV est le sébaçate de bis(1,2,2,6,6-pentaméthyl-4-pipéridinyle).

12. Tissu enduit, imperméable à l'eau et perméable à la vapeur d'eau, comportant une enduction mince et microporeuse d'un uréthane aromatique, ayant' une vitesse de transmission de la vapeur d'eau d'au moins 800 g/m².24 h, une résistance à la pression hydrostatique d'au moins 69 kPa et une résistance à la lumière ultraviolette d'au moins 20 heures, selon la méthode d'essai AATCC 16A-1982.

13. Procédé selon les revendications 1 à 13, pour fabriquer un tissu enduit, imperméable à l'eau et perméable à la vapeur d'eau, qui a subi un traitement retardateur de flamme, sur lequel se trouve une couche microporeuse d'un polyuréthane, la solution d'élastomère de polyuréthane contenant une quantité à effet retardateur de flamme d'un agent retardateur de flamme.

14. Tissu enduit, imperméable à l'eau, perméable à la vapeur d'eau et traité par un retardateur de flamme, comportant une enduction d'uréthane ayant une vitesse de transmission de la vapeur d'eau d'au moins 800 g/m².24 h et une résistance à la pression hydrostatique d'au moins 69 kPa, laquelle enduction comprend un retardateur de flamme.
